# FASCICULE DE BREVET EUROPEEN

(11) **EP 3 828 075 B1**
(45) Date de publication et mention de la délivrance du brevet: **29.11.2023**
(21) Numéro de dépôt: 20200769.6
(22) Date de dépôt: 08.10.2020
(51) Int. Cl.: B64C 1/14, B64C 1/24, B64C 27/00, B60R 3/02, B61D 23/02

(54) **VEHICULE MUNI D'UN MARCHEPIED AYANT UNE MARCHE ESCAMOTABLE**
FAHRZEUG MIT EINER TRITTSTUFE, DIE EINE EINZIEHBARE STUFE AUFWEIST
VEHICLE EQUIPPED WITH A STEP HAVING A RETRACTABLE FOOTBOARD

(30) Priorité: 28.11.2019 FR 1913359
(43) Date de publication de la demande: 02.06.2021
(73) Titulaire: Airbus Helicopters, 13725 Marignane Cedex (FR)
(72) Inventeur: BEDUS, Olivier, 13121 Aurons (FR); GIERCZYNSKI, Alexandre, 13510 Eguilles (FR); DUHAMEL, Jérémy, 13730 Saint Victoret (FR)
(74) Mandataire: GPI Brevets

(56) Documents cités:
- EP-A1- 0 884 219
- EP-A1- 0 884 219
- EP-A1- 3 415 413
- EP-A1- 3 415 413
- DE-B3-102017 220 834
- FR-A1- 2 880 851
- JP-A- S6 220 745
- US-A1- 2008 224 438

## Description

La présente invention concerne un véhicule muni d'un marchepied ayant une marche escamotable, permettant à un utilisateur de monter ou de descendre du véhicule. Un tel véhicule peut être un giravion par exemple.

Un marchepied peut être agencé sur un véhicule pour qu'un utilisateur puisse aisément entrer ou sortir de ce véhicule.

Un premier type de marchepied de giravion comporte une marche fixe qui est en permanence dans une position déployée, à savoir une position dans laquelle la marche sert d'appui à un passager.

Un deuxième type de marchepied de giravion comporte une marche rendue escamotable par une installation motorisée. En vol par exemple, la marche est positionnée par l'installation motorisée dans une position escamotée visant à minimiser son impact aérodynamique. Par contre, l'installation motorisée déplace si besoin la marche de la position escamotée vers une position déployée. Dans cette position déployée la marche sert alors d'appui pour un passager. Ce deuxième type de marchepied est intéressant mais nécessite de fait une installation motorisée susceptible de la rendre complexe, énergivore, voire de la rendre difficilement adaptable sur un giravion existant.

Un troisième type d'installation de giravion comporte un escalier escamotable comprenant plusieurs marches. Une telle installation est notamment intéressante en présence d'une garde au sol importante mais peut s'avérer de fait encombrant et lourd.

Le document FR 1119246 décrit un aéronef muni d'un point d'attache auquel peut être fixée, par l'intermédiaire d'une articulation à rotule, une extrémité supérieure d'une échelle, l'échelle ayant des pieds pourvus de moyens facilitant leur déplacement sur le sol.

Le document FR 3004424 décrit un marchepied comprenant un ensemble d'appui portatif.

Le document US 3986503 décrit un marchepied pouvant être fixé à une machine.

Le document EP 3415413 décrit un véhicule ayant une porte coulissante associée à une unité de marchepied. L'unité de marchepied comprend une coque extérieure. Une unité de dépliage/pliage raccorde la coque extérieure au véhicule, l'unité de dépliage/pliage comprenant un mécanisme coulissant qui est apte à être actionné par la porte coulissante au moins lors d'un déplacement coulissant d'ouverture et lors d'un déplacement coulissant de fermeture de la porte coulissante.

Le document JP 62-20745 décrit un système éloigné de l'invention en ayant une porte non coulissante et une marche.

Le document EP 0884219 décrit une automobile munie d'une porte coulissante et d'un marchepied. Des moyens de transmission sont actionnés par le mouvement coulissant de la porte pour commander un moyen de positionnement du marchepied.

Les documents FR 2880851 et DE 10 2017 220834 sont aussi connus.

Enfin, le document US 2008/224438 décrit un système motorisé.

La présente invention a pour objet de proposer un marchepied muni d'une marche non motorisée qui puisse être escamotée et déployée en fonction du besoin.

Selon l'invention, un véhicule est muni d'une porte coulissante et d'un marchepied, le marchepied comportant une marche mobile d'une position escamotée vers une position déployée et inversement.

Le véhicule peut être un aéronef, un giravion, un véhicule terrestre du type train, voiture, autobus ou encore camion par exemple voire un véhicule maritime ou encore spatial.

L'expression « porte coulissante » désigne une porte au moins mobile en translation par rapport à une structure du véhicule, et par exemple par rapport à un fuselage sur un aéronef. En effet, une porte coulissante peut suivre lors de son ouverture une trajectoire relativement complexe pour s'éloigner latéralement d'une enveloppe du véhicule et pour coulisser parallèlement à cette enveloppe, par exemple de l'avant vers l'arrière du véhicule et inversement.

Le marchepied comporte un système de déploiement mécanique non motorisé relié à la marche et à la porte coulissante, le système de déploiement étant activé par un déplacement de la porte pour déplacer ladite marche entre la position déployée et la position escamotée. Le marchepied comprend une sécurité configurée pour désolidariser, éventuellement de manière motorisée voire aussi automatiquement, ladite porte et ladite marche en cas de blocage de ladite marche.

L'expression « système de déploiement mécanique non motorisé » signifie que ce système est non motorisé et donc actionné mécaniquement. En particulier, le système de déploiement mécanique est actionné par la porte elle-même.

Dès lors, le système de déploiement a pour fonction d'induire qu'un coulissement selon un sens d'ouverture de la porte coulissante génère automatiquement un déplacement de la marche de la position escamotée vers la position déployée et qu'un coulissement selon un sens de fermeture de la porte coulissante génère automatiquement un déplacement de la marche de la position déployée vers la position escamotée.

Le système de déploiement exploite ainsi l'énergie résultant de la manoeuvre de la porte coulissante pour déplacer la marche entre sa position déployée et sa position escamotée, à savoir de la position déployée vers la position escamotée ou de la position escamotée vers la position déployée en fonction du déplacement de la porte. La porte peut être manoeuvrée au sol ou en vol, par exemple durant une opération de treuillage. Dès lors, la marche peut être positionnée dans sa position escamotée lorsque la porte est fermée et peut être déployée dans sa position déployée lorsque la porte s'ouvre sans solliciter une installation motorisée énergivore.

De plus, le marchepied comporte une sécurité qui coopère avec le système de déploiement. La porte et la marche étant mécaniquement liées par le système de déploiement, cette sécurité a pour fonction de désolidariser la porte et la marche en présence d'un blocage accidentel de la marche afin d'éviter un blocage de la porte. Si la marche bloque le déplacement de la porte, la sécurité peut être actionnée automatiquement ou manuellement pour rendre la porte indépendante et permettre sa manoeuvre.

Dès lors, l'invention peut permettre d'agencer relativement facilement un marchepied sur un véhicule.

Le véhicule peut de plus comporter une ou plusieurs des caractéristiques qui suivent, prises seules ou en combinaison.

Selon un aspect, le marchepied peut comporter un support fixe solidarisé à une structure du véhicule.

Un tel support peut notamment comprendre un boîtier. Le boîtier peut comprendre une paroi pouvant elle-même servir d'appui. Cette paroi peut comprendre une face supérieure du boîtier. Par exemple, lorsque la porte est fermée et que la marche est de fait escamotée, cette paroi peut servir d'appui à un opérateur pour accéder à une partie haute de l'aéronef, par exemple à des fins de maintenance.

Selon une première réalisation, le système de déploiement comporte un arbre de commande portant la marche et solidaire de la marche en rotation autour d'un axe de basculement, la marche étant mobile en rotation autour de l'axe de basculement entre la position escamotée et la position déployée, ledit système de déploiement comportant au moins un engrenage interposé entre ledit arbre de commande et ladite porte.

L'engrenage peut être un engrenage à vis sans fin par exemple.

L'arbre de commande peut être articulé à une structure de l'aéronef par divers soutiens, l'arbre de commande étant mobile en rotation par rapport aux soutiens. Chaque soutien peut comprendre au moins une pièce mécanique fixée à la structure.

Selon la première réalisation, la marche est donc mobile en rotation autour de l'axe de basculement. Le système de déploiement comprenant alors au moins un engrenage cinématiquement disposé entre la porte et la marche. Un déplacement de la porte met alors en mouvement l'engrenage qui engendre à son tour la rotation de la marche.

Selon un aspect du premier mode de réalisation, ledit au moins un engrenage peut comporter :
- une roue solidaire, au moins hors cas de blocage de la marche, d'un arbre de liaison, cette roue engrenant une cannelure hélicoïdale solidaire, au moins hors cas de blocage de la marche, dudit arbre de commande, ou
- ledit au moins un engrenage peut comporter une cannelure hélicoïdale solidaire, au moins hors cas de blocage de la marche, d'un arbre de liaison, cette cannelure hélicoïdale engrenant une roue solidaire, au moins hors cas de blocage de la marche, dudit arbre de commande.

Dès lors, une rotation d'un arbre de liaison induit une rotation de l'arbre de commande via un engrenage et par suite une rotation de la marche.

Selon un aspect du premier mode de réalisation, la sécurité peut comporter un limiteur de couple.

Par exemple, un limiteur de couple est agencé au sein de chaque unité comprenant un arbre de liaison et un engrenage. Selon divers exemples un limiteur de couple peut être agencé entre l'arbre de liaison et une roue de l'engrenage, entre l'arbre de commande et une roue de l'engrenage, entre deux parties de l'arbre de liaison...

Un tel limiteur de couple peut être un limiteur de couple à bille usuel. Un limiteur de couple à bille usuel comporte au moins un déclencheur et une bride. Le déclencheur est muni d'une bille poussée par un ressort dans un évidement de la bride pour lier en rotation le déclencheur et la bille. Dès que le couple mécanique transmis atteint un seuil de couple, la bille sort de l'évidement de la bride ce qui désolidarise en rotation le déclencheur et la bride.

Selon une première variante du premier mode de réalisation, l'arbre de liaison peut porter une poulie, le système de déploiement comportant une courroie portée par ladite poulie, ledit système de déploiement ayant un lien de commande, ledit lien de commande ayant une première attache solidaire de la courroie et une deuxième attache attachée à ladite porte.

Eventuellement, le système de déploiement peut comporter deux arbres de liaison munis chacun d'une dite poulie, la courroie étant portée par les poulies des deux arbres de liaison.

Dès lors, le déplacement de la porte induit un déplacement du lien de commande. Ce lien de commande exerce un effort de traction sur la courroie qui met en rotation chaque arbre de liaison via la poulie correspondante. Chaque arbre de liaison provoque alors la rotation de la marche via un engrenage.

Eventuellement, un limiteur de couple est agencé entre une poulie et un arbre de liaison.

Selon un aspect de la première variante du premier mode de réalisation, le lien de commande peut comporter un premier tronçon relié à la première attache et à un guide, le lien de commande comprenant un deuxième tronçon relié au guide et à la deuxième attache, ledit marchepied comportant un rail le long duquel coulisse ledit guide.

Le mouvement du lien de commande est ainsi guidé en translation.

Le premier tronçon et le deuxième tronçon peuvent être du type d'une corde à piano par exemple.

Eventuellement, le rail appartient le cas échéant à un support, et par exemple un support tel que décrit précédemment. Le rail peut être éventuellement ménagé dans une paroi pouvant elle-même servir d'appui.

Selon une deuxième variante du premier mode de réalisation, ledit arbre de liaison peut porter un pignon engrené par une crémaillère, le système de déploiement comprenant un rail de guidage dans lequel coulisse ladite crémaillère, le système de déploiement comportant un lien de guidage articulé à ladite porte, ladite crémaillère comportant un coulisseau coulissant le long du lien de guidage.

Par exemple, le guide prend la forme d'une glissière, le coulisseau pouvant prendre la forme d'un doigt ou équivalent glissant en translation dans la glissière.

La deuxième variante s'avère ainsi relativement simple mécaniquement et ne nécessite éventuellement qu'une seule unité munie d'un arbre de liaison et d'un engrenage.

Selon une troisième variante du premier mode de réalisation, la marche est mobile en rotation autour d'un axe de basculement entre la position déployée et la position escamotée, le système de déploiement peut comporter un bras de commande mobile par rapport à la porte. Le bras de commande peut être mobile en translation ou être articulé à ladite porte et mobile en rotation par rapport à la porte autour d'un axe de dégagement. Ladite sécurité comporte un moyen de préhension solidaire du bras de commande pour déplacer manuellement ledit bras de commande entre une position active et une position inactive. Par exemple, le moyen de préhension peut mettre en rotation le bras de commande autour dudit axe de dégagement qui est toujours à l'aplomb de ladite marche. Indépendamment de la variante, le bras de commande est solidaire en translation de la porte lors du coulissement de cette porte. Ledit bras de commande n'est pas en contact avec ladite marche dans la position inactive. Ledit bras de commande est dans la position active en contact avec ladite marche pour provoquer une rotation de la marche autour de l'axe de basculement par interférence de forme, ledit marchepied comprenant au moins un ressort exerçant un effort de rappel pour déplacer la marche dans la position escamotée.

Le bras de commande peut être déplacé, et le cas échéant pivoté, par la sécurité dans la position inactive pour être rendu indépendant de la marche ou dans la position active pour induire un basculement de la marche par interférence de forme lors du coulissement de la porte.

Selon un aspect du premier mode de réalisation, le support peut comporter deux flancs fixés à une structure du véhicule, ledit arbre de commande étant porté par lesdits flancs, ledit arbre de commande s'étendant longitudinalement entre les deux flancs selon ledit axe de basculement.

Selon un aspect et quelle que soit la réalisation, le support peut comporter un boîtier présentant une face supérieure située sous la porte selon une direction en élévation, ladite face supérieure étant configurée pour porter un humain. Le boîtier peut avoir une face avant présentant une ouverture, ladite marche pouvant obturer ladite ouverture dans ladite position escamotée.

Dès lors, le boîtier en tant que tel et notamment sa face supérieure peut aussi servir de marche.

Selon un deuxième mode de réalisation, la marche est mobile en translation, la marche comprenant une rainure inclinée, le système de déploiement comportant un organe de connexion muni d'un coulisseau coulissant dans ladite rainure et solidaire de ladite porte, ladite sécurité comprenant au moins un moyen de préhension rendant mobile l'organe de connexion ou une zone fusible de l'organe de connexion.

L'expression « au moins un moyen de préhension rendant mobile l'organe de connexion ou une zone fusible de l'organe de connexion » signifie que la sécurité comporte un moyen de préhension déplaçant l'organe de connexion pour le déconnecter de la rainure de la marche et/ou une zone fusible de l'organe de connexion.

En raison de l'inclinaison de la rainure, une translation de l'organe de connexion selon une direction de coulissement parallèlement à une enveloppe du véhicule induit une translation de la marche selon une direction latérale sensiblement orthogonale à la direction de coulissement.

La marche peut s'étendre selon la direction latérale d'un bord arrière jusqu'à un bord avant. En outre, la rainure s'étend d'une première extrémité jusqu'à une deuxième extrémité. En raison de l'inclinaison de la rainure sur la marche, une première distance séparant la première extrémité du bord arrière est supérieure à une deuxième distance séparant la deuxième extrémité de ce même bord arrière.

Selon un autre aspect et quelle que soit la réalisation, le véhicule peut être un giravion.

L'invention et ses avantages apparaîtront avec plus de détails dans le cadre de la description qui suit avec des exemples donnés à titre illustratif en référence aux figures annexées qui représentent :
[Fig 1] la figure 1, une vue de l'extérieur d'un véhicule muni d'un marchepied selon l'invention ayant une marche dans la position escamotée,
[Fig 2] la figure 2, une vue partielle du marchepied de la figure 1 ayant une marche dans la position déployée,
[Fig 3] la figure 3, une vue schématique d'un arbre de liaison coopérant avec un limiteur de couple,
[Fig 4] la figure 4, une vue partielle d'un marchepied à crémaillère,
[Fig 5] la figure 5, une vue de l'extérieur d'un véhicule muni d'un marchepied à bras de commande,
[Fig 6] la figure 6, une vue de l'intérieur d'un véhicule muni d'un marchepied à bras de commande,
[Fig 7] la figure 7, une vue de l'extérieur d'un véhicule muni d'un marchepied à bras de commande ayant une marche dans la position escamotée,
[Fig 8] la figure 8, une vue de l'extérieur d'un véhicule muni d'un marchepied à bras de commande ayant une marche se déplaçant vers sa position déployée,
[Fig 9] la figure 9, une vue de l'extérieur d'un véhicule muni d'un marchepied à bras de commande ayant une marche dans sa position déployée,
[Fig 10] la figure 10, une vue de l'extérieur d'un véhicule muni d'un marchepied à marche rainurée dans sa position escamotée,
[Fig 11] la figure 11, une vue de l'extérieur d'un véhicule muni d'un marchepied ayant une marche rainurée se déplaçant vers sa position déployée,
[Fig 12] la figure 12, une vue de l'extérieur d'un véhicule muni d'un marchepied ayant une marche rainurée dans sa position déployée,
[Fig 13] la figure 13, une vue de l'extérieur d'un véhicule muni d'un marchepied ayant une marche rainurée à doigt mobile en élévation, et
[Fig 14] la figure 14, une vue de l'intérieur d'un véhicule selon la figure 13.

Les éléments présents dans plusieurs figures distinctes sont affectés d'une seule et même référence.

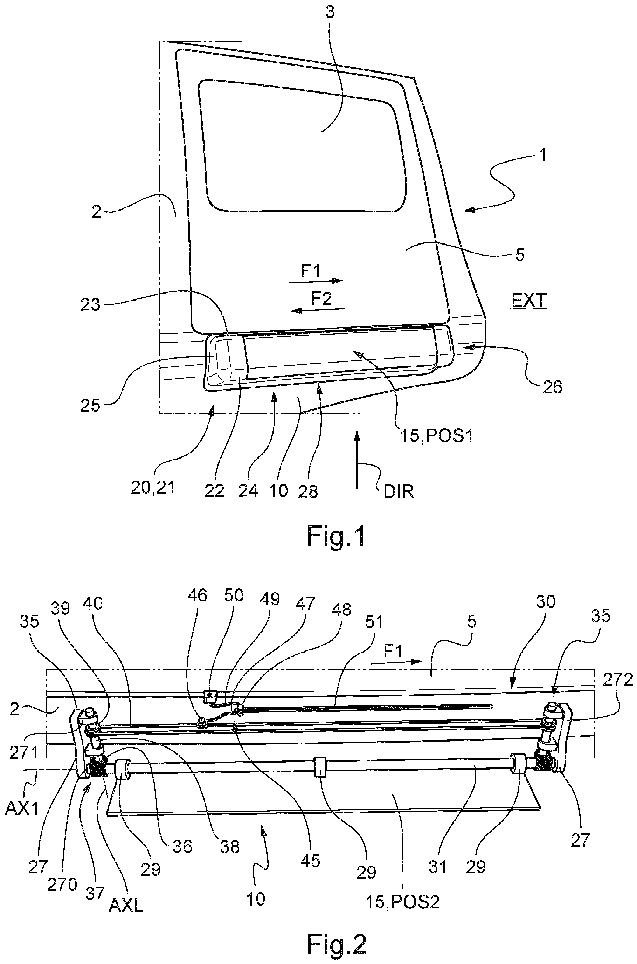

La figure 1 présente une vue partielle d'un véhicule 1 selon l'invention.

Le véhicule 1 peut prendre diverses formes en pouvant être un véhicule automobile, naval ou aérien par exemple. En particulier, le véhicule 1 peut être un giravion.

Indépendamment de cet aspect, le véhicule 1 comporte une structure 2. Le terme « structure » désigne tout élément du véhicule 1 susceptible de pouvoir porter un marchepied 10. Une structure 2 peut comprendre par exemple des longerons, des nervures, des cadres, un fuselage, un châssis...

Le véhicule 1 comprend en outre un passage 3 mettant en communication un milieu extérieur EXT situé à l'extérieur du véhicule 1 et un milieu intérieur INT situé à l'intérieur de ce véhicule 1. De plus, le véhicule 1 comporte une porte 5 coulissante pour obturer si besoin le passage 3. L'expression « porte coulissante » désigne une paroi mobile au moins en translation selon une direction de coulissement sensiblement parallèle au passage et apte à obturer le passage 3.

Par ailleurs, le véhicule 1 est muni d'un marchepied 10.

Ce marchepied 10 possède une marche 15, et éventuellement une unique marche 15. La marche 15 est mobile entre une position escamotée POS1 dans laquelle la marche 15 ne peut pas servir d'appui à un individu et une position déployée POS2 illustrée sur d'autres figures dans laquelle la marche 15 peut servir d'appui à un individu. La marche 15 est portée par un support 20 fixe qui peut être fixé à la structure 2. Le support 20 peut comprendre au moins un organe fixé à la structure 2 et portant directement ou indirectement la marche 15.

De plus, le marchepied 10 comporte un système de déploiement non visible sur la figure 1 qui lie mécaniquement et cinématiquement la marche 15 et la porte 5. Le système de déploiement transforme un déplacement de la porte 5 en un déplacement de la marche 15. L'ouverture de la porte 5 selon la flèche F1 induit automatiquement et sans moteur, via le système de déploiement, un déplacement de la marche 15 de la position escamotée POS1 vers la position déployée POS2. Au contraire, une fermeture de la porte 5 selon la flèche F2 induit automatiquement et sans moteur, via le système de déploiement, un déplacement de la marche 15 de la position déployée POS2 vers la position escamotée POS1.

En outre, le marchepied 10 comprend au moins un système dénommé « sécurité » et non visible sur la figure 1 pour inhiber le système déploiement soit automatiquement soit via une activation humaine. La sécurité permet ainsi de désolidariser mécaniquement la porte 5 et la marche 15 en cas de blocage de la marche 15.

Par ailleurs, un support 20 peut par exemple comprendre un boîtier 21 dans lequel se trouve notamment le système de déploiement au moins partiellement. Le boîtier 21 peut posséder une face supérieure 23 située sous le passage 3 selon la direction en élévation DIR et donc sous la porte 5 au moins lorsque cette porte 5 est fermée et obture donc le passage 3. Eventuellement, le boîtier 21 s'étend de bas en haut, lorsque le véhicule repose sur un sol, d'une face inférieure 24 jusqu'à la face supérieure 23. Le boîtier 21 s'étend latéralement d'une première face latérale 25 jusqu'à une deuxième face latérale 26. De plus, le boîtier peut comprendre une face avant 22 éventuellement munie d'une ouverture 28 obturée par la marche 15 lorsque cette marche 15 se trouve dans la position escamotée. En outre, le boîtier 21 peut être dimensionné pour permettre à un humain de marcher sur la face supérieure 23.

Le système de déploiement peut aussi être complètement ou partiellement logé dans un logement du véhicule 1 ou peut être apparent.

Selon une première réalisation décrite par les figures 1 à 9, la marche 15 peut être mobile en rotation par rapport à la structure 2 autour d'un axe de basculement pour passer de la position escamotée à la position déployée et inversement.

Selon la première variante du premier mode de réalisation de la figure 2, le système de déploiement 30 comporte un arbre de commande 31 qui s'étend le long d'un axe de basculement AX1. L'arbre de commande 31 peut être porté par le support 20 en possédant a minima un degré de liberté en rotation autour de l'axe de basculement AX1 par rapport au support 20.

Par exemple, le support 20 comporte deux flancs 27 qui portent conjointement l'arbre de commande 31. Eventuellement, l'arbre de commande 31 s'étend longitudinalement d'une première zone extrémale agencée dans un premier flanc 271 jusqu'à une deuxième zone extrémale agencée dans un second flanc 272, un palier 270 étant disposé entre chaque flanc 27 et une zone extrémale.

Par ailleurs, l'arbre de commande 31 est solidaire en rotation de la marche 15 autour de l'axe de basculement AX1. L'arbre de commande 31 porte ainsi la marche 15. Par exemple, l'arbre de commande 31 est solidarisé à trois fixations 29 de la marche 15. Dès lors, une rotation de l'arbre de commande 31 autour de l'axe de basculement AX1 par rapport à la structure induit une rotation identique de la marche 15.

Pour mettre en rotation l'arbre de commande 31 suite à une translation de la porte 5 selon une direction de coulissement, le système de déploiement 30 comporte au moins un engrenage 35 et deux engrenages 35 selon l'exemple illustré.

Chaque engrenage 35 coopère avec l'arbre de commande 31 pour qu'un mouvement de l'engrenage 35 induise une rotation de la marche 15.

Chaque engrenage 35 coopère avec un arbre de liaison 38 et comporte une roue 36 et une cannelure 37 hélicoïdale. La roue 36 est par exemple une roue à dentures radiales droites, à savoir sensiblement parallèles à l'axe de rotation de la roue 36. Selon l'exemple illustré, l'arbre de liaison 38 porte une roue 36 solidaire en rotation de l'arbre de liaison 38 autour d'un axe de rotation AXL de l'arbre de liaison 38 au moins hors cas de blocage de la marche, cette roue 36 engrenant une cannelure 37 hélicoïdale qui est solidaire de l'arbre de commande 31 au moins hors cas de blocage de la marche. Par exemple, la roue 36 est solidarisée à l'arbre de liaison par des moyens directs de liaison, des cannelures droites par exemple, ou via un limiteur de couple. Il en va de même de la cannelure hélicoïdale.

Alternativement, l'arbre de liaison 38 peut être solidaire, au moins hors cas de blocage de la marche, d'une cannelure hélicoïdale qui engrène une roue, la roue étant solidaire de l'arbre de commande 31 au moins hors cas de blocage de la marche. Par exemple, la roue 36 est solidarisée à l'arbre de commande par des moyens directs de liaison, des cannelures droites par exemple, ou via un limiteur de couple. Il en va de même de la cannelure hélicoïdale.

Par ailleurs, l'arbre de liaison 38 porte selon la figure 2 une poulie 39, la poulie 39 étant solidaire en rotation de l'arbre de liaison 38 autour d'un axe de rotation AXL de l'arbre de liaison 38 au moins hors cas de blocage de la marche. Dès lors, le système de déploiement 30 comporte une courroie 40 portée par chaque poulie 39. La courroie 40 décrit une boucle fermée tournant autour de la poulie 39 afin qu'un déplacement de la courroie 40 induise une rotation de la poulie 39 par frottement.

De plus, le système de déploiement 30 comprend un lien de commande 45 reliant la courroie 40 à la porte 5 pour qu'une translation selon la direction de coulissement de la porte 5 induise un mouvement de la courroie 40. Le lien de commande 45 est ainsi muni d'une première attache 46 fixée à la courroie 40 et d'une deuxième attache 50 fixée à la porte 5. Par exemple, la première attache 46 comporte une pince ou équivalent serrant la courroie 40. Par exemple, la deuxième attache 50 comporte une plaque perforée.

Ce lien de commande 45 peut de plus être guidé.

Ainsi, selon un exemple le lien de commande 45 peut posséder un premier tronçon 47 et un deuxième tronçon 49, par exemple chacun du type d'une tige souple, d'une bielle ou d'une corde à piano.

Le premier tronçon 47 est ainsi fixé, à savoir relié, de manière usuelle à la première attache 46 et de plus à un guide 48 disposé contre un rail 51. Le premier tronçon 47 peut ainsi être solidarisé et/ou articulé à la première attache 46 et/ou au guide 48.

Le guide 48 prend la forme d'un organe apte à coulisser par rapport au rail 51. Selon un exemple, le guide 48 comporte un doigt ou équivalent mobile dans une fente du rail 51. Selon un autre exemple, le guide 48 peut prendre la forme d'un chariot coulissant sur le rail 51. Le rail 51 peut être intégré au support 20. Par exemple, le rail 51 est fixé à une face supérieure 23 d'un boîtier 21 du support 20.

Par ailleurs, le deuxième tronçon 49 est aussi relié au guide 48 et à la deuxième attache 50. Le deuxième tronçon 49 peut ainsi être solidarisé et/ou articulé à la deuxième attache 50 et/ou au guide 48.

Selon un exemple, le premier tronçon 47 est solidarisé à la première attache 46 et au guide 48, le deuxième tronçon 49 étant solidarisé au guide et articulé à la deuxième attache.

Selon un autre aspect, la sécurité 80 peut comporter un système manuel. Par exemple, un tel système manuel peut comprendre une goupille liant le deuxième tronçon 49 à la deuxième attache 50, en traversant un orifice du deuxième tronçon 49 et un orifice de la deuxième attache 50. Cette goupille peut être solidaire d'un câble débouchant dans le milieu intérieur par exemple. Ainsi en cas de blocage, un opérateur peut tirer sur la goupille, éventuellement en tirant sur le lien, pour désolidariser la deuxième attache 50 du deuxième tronçon 49.

De manière complémentaire ou alternative, la sécurité 80 peut comporter un limiteur de couple 81. Un tel limiteur de couple 81 peut être agencé par exemple au sein de chaque unité comprenant un engrenage et un arbre de liaison.

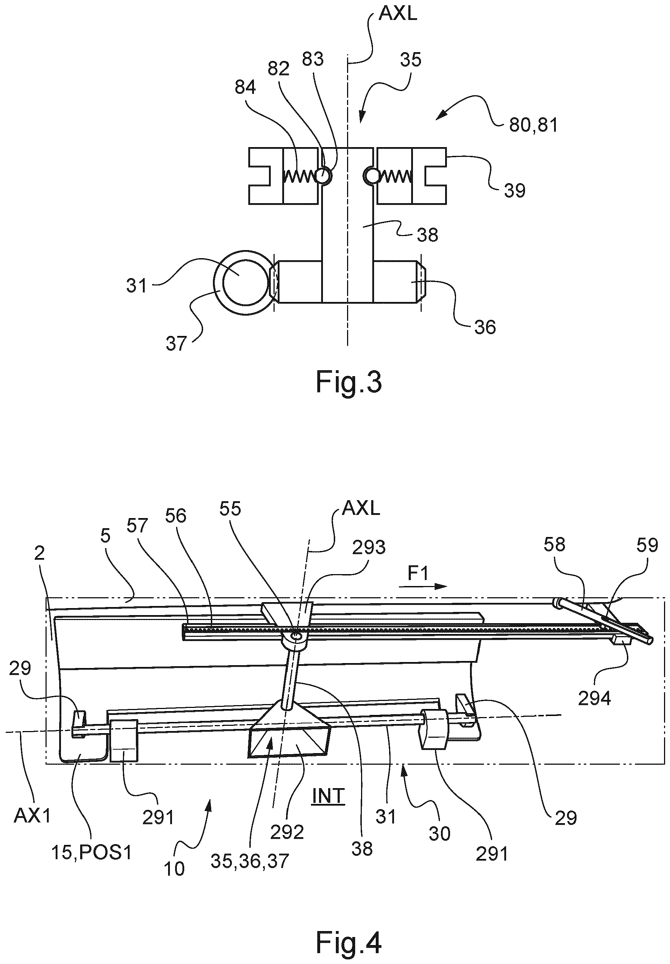

La figure 3 illustre ainsi un limiteur de couple 81 disposé entre l'arbre de liaison 38 et une poulie 39. Le limiteur de couple 81 illustré comporte par exemple au moins un voire une pluralité d'évidements 83 coopérant respectivement au moins un voire une pluralité de déclencheurs comprenant chacun une bille 82 et un ressort 84. Selon l'exemple illustré, les évidements 83 sont ménagés sur une couronne de l'arbre de liaison 38 et les déclencheurs sont disposés au sein d'un anneau solidaire de la poulie 39. Alternativement, un limiteur de couple 81 est par exemple agencé entre l'arbre de liaison 38 et la roue 36 ou encore entre deux sous-ensembles de l'arbre de liaison 38.

Dès lors et en référence à la figure 2, lorsque la porte 5 est ouverte, la porte 5 se déplace au moins en translation selon la flèche F1. Le lien de commande 45 et notamment le deuxième tronçon 49 n'entrave pas un mouvement complexe de la porte 5. Le lien de commande 45 tire alors sur la courroie 40 qui entraîne en rotation les poulies 39. Chaque arbre de liaison 38 entraîne alors le basculement de la marche 15.

Si la marche 15 se bloque, le couple exercé sur le limiteur de couple 81 augmente. Chaque bille 82 sort de son évidement 83 ce qui permet de désolidariser la porte 5 et la marche 15.

La figure 4 présente une deuxième variante du premier mode de réalisation vue du milieu intérieur INT. A l'instar de la première variante, le système de déploiement 30 comporte un arbre de commande 31 qui s'étend le long d'un axe de basculement AX1. L'arbre de commande 31 peut être porté par le support 20 en possédant a minima un degré de liberté en rotation autour de l'axe de basculement AX1 par rapport au support 20.

Par exemple, le support 20 comporte deux attaches latérales 291 et une attache centrale 292 qui portent conjointement l'arbre de commande 31. Eventuellement, un palier est disposé entre chaque attache latérale et centrale 291, 292 et l'arbre de commande 31.

Par ailleurs, l'arbre de commande 31 est solidaire en rotation de la marche 15 autour de l'axe de basculement AX1. L'arbre de commande 31 porte ainsi la marche 15. Par exemple, l'arbre de commande 31 est solidarisé à deux fixations 29 de la marche 15. Dès lors, une rotation de l'arbre de commande 31 autour de l'axe de basculement AX1 induit une rotation identique de la marche 15.

Pour mettre en rotation l'arbre de commande 31 suite à une translation de la porte 5, le système de déploiement 30 comporte au moins une unité ayant un arbre de liaison 38 et un engrenage 35 et une unique unité ayant un arbre de liaison 38 et un engrenage 35 selon l'exemple illustré.

Chaque engrenage 35 coopère avec l'arbre de commande 31 pour qu'un mouvement de l'engrenage 35 induise une rotation de la marche 15.

Chaque engrenage 35 comporte un arbre de liaison 38 ainsi qu'une roue 36 et une cannelure 37 hélicoïdale. La roue 36 est par exemple une roue à dentures radiales droites, à savoir sensiblement parallèle à l'axe de rotation de la roue. Selon l'exemple illustré, l'arbre de liaison 38 porte une roue 36 solidaire en rotation de l'arbre de liaison 38 autour d'un axe de rotation AXL de l'arbre de liaison 38 au moins hors cas de blocage de la marche, cette roue 36 engrenant une cannelure 37 hélicoïdale qui est solidaire de l'arbre de commande 31 au moins hors cas de blocage de la marche. Par exemple, la roue 36 est solidarisée à l'arbre de liaison par des moyens directs de liaison, des cannelures droites par exemple, ou via un limiteur de couple. Il en va de même de la cannelure hélicoïdale.

Alternativement, l'arbre de liaison 38 peut être solidaire au moins hors cas de blocage de la marche d'une cannelure hélicoïdale qui engrène une roue, la roue étant solidaire de l'arbre de commande 31 au moins hors cas de blocage de la marche. Par exemple, la roue 36 est solidarisée à l'arbre de commande par des moyens directs de liaison, des cannelures droites par exemple, ou via un limiteur de couple. Il en va de même de la cannelure hélicoïdale.

Selon l'exemple de la figure 4, l'arbre de liaison 38 peut aussi être porté par l'attache centrale 292. De plus, cette attache centrale 292 peut aussi loger en son sein la roue et la cannelure de l'engrenage.

Par ailleurs, l'arbre de liaison 38 peut aussi être maintenu par un premier soutien 293 fixé à la structure 2.

En outre, l'arbre de liaison 38 peut porter un pignon 55. Ce pignon 55 est engrené par une crémaillère 56 qui coulisse dans un rail de guidage 57. Le rail de guidage 57 peut être fixé à la structure 2 par le premier soutien 293 et un deuxième soutien 294.

Dès lors, le système de déploiement 30 peut comprendre un lien de guidage 58 qui est articulé à la porte 5 et coopère avec un coulisseau 59 solidaire de la crémaillère 56. Par exemple, le lien de guidage 58 comporte une fente dans laquelle coulisse un doigt 59 solidaire de la crémaillère 56.

A l'instar de la première variante du premier mode de réalisation, la sécurité 80 peut comporter une goupille liant par exemple le lien de guidage 58 à la porte.

De manière complémentaire ou alternative, la sécurité 80 peut aussi comporter un limiteur de couple 81. Un tel limiteur de couple peut être agencé par exemple au sein de l'unité comprenant un arbre de liaison 38 et un engrenage et peut reprendre les caractéristiques décrites dans le cadre de la première variante du premier mode de réalisation.

Dès lors, lorsque la porte 5 est mise en mouvement, la porte 5 se déplace au moins en translation selon la flèche F1. Le lien de guidage n'entrave pas un mouvement complexe de la porte 5. Le lien de guidage 58 se déplace et induit la translation de la crémaillère 56 par rapport au rail de guidage 57. La crémaillère 56 induit alors la rotation de l'arbre de liaison 38 qui provoque le basculement de la marche 15.

Si la marche 15 se bloque, le couple exercé sur le limiteur de couple 81 augmente. Chaque bille sort de son évidement ce qui permet de désolidariser la porte 5 et la marche 15.

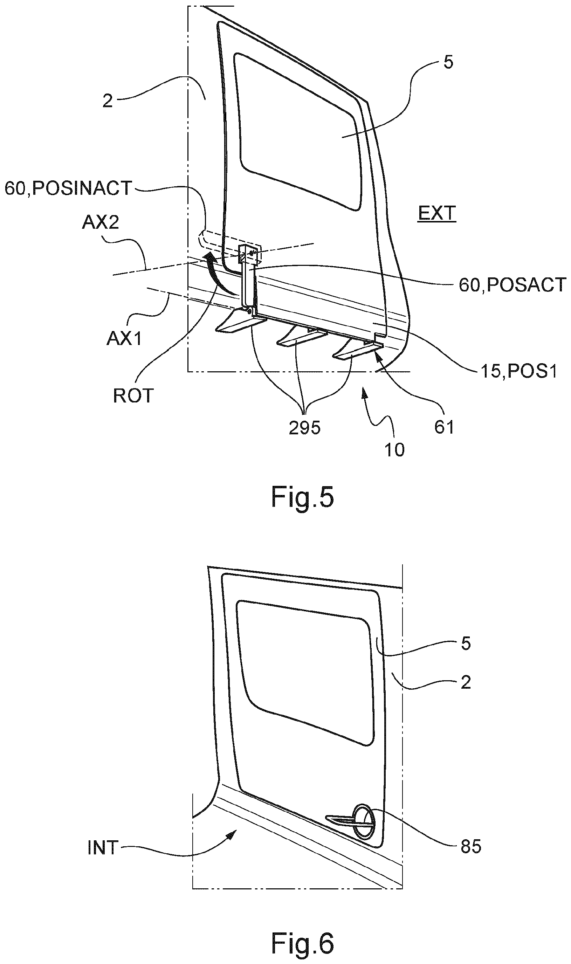

Selon la troisième variante du premier mode de réalisation de la figure 5, la marche 15 est articulée au support 20 pour être mobile en rotation autour d'un axe de basculement AX1 par rapport à la structure du véhicule. Selon l'exemple illustré, la marche 15 est articulée à trois soutiens 295. Par exemple, un unique arbre ou plusieurs arbres coopèrent avec les soutiens 295. Au moins un ressort 61 peut exercer un effort sur la marche 15 ou sur un arbre pour tendre à positionner la marche dans la position escamotée. Par exemple, chaque ressort est interposé entre la marche et un soutien ou entre un arbre solidaire de la marche et un soutien.

Par ailleurs, le système de déploiement 30 comporte un bras de commande 60 disposé dans le milieu extérieur EXT. Le bras de commande 60 est rigide. Le bras de commande peut comprendre un unique degré de liberté par rapport à la porte. Par exemple, le bras de commande peut être articulé à la porte 5. Le bras de commande 60 est ainsi mobile en rotation ROT par rapport à la porte 5 autour d'un axe de dégagement AX2 entre une position inactive POSINACT et une position active POSACT.

En référence à la figure 6, la sécurité 80 peut comporter un moyen de préhension 85 qui est disposé dans le milieu intérieur INT et qui est solidaire du bras de commande 60. Le moyen de préhension 85 comporte par exemple une poignée solidaire du bras de commande 60.

Selon une possibilité, le moyen de préhension 85 et le bras de commande 60 sont mobiles en rotation. Un individu présent dans le véhicule peut alors tourner la poignée pour engendrer la rotation du bras de commande 60 autour de l'axe de dégagement AX2.

Dans la position active POSACT illustrée en traits pleins sur la figure 5, le bras de commande 60 interfère avec la marche 15. Par contre, l'axe de dégagement AX2 est toujours à l'aplomb de la marche 15 pour que le bras de commande 60 ne soit pas en contact avec la marche 15 dans la position inactive POSINACT illustrée en pointillés.

Selon une autre possibilité, le moyen de préhension 85 et le bras de commande 60 sont mobiles en translation vers le haut, soit selon une direction qui n'est pas confondue avec la direction de coulissement de la porte 5. Un individu présent dans le véhicule peut alors déplacer la poignée vers le haut pour éloigner le bras de commande 60 de la marche.

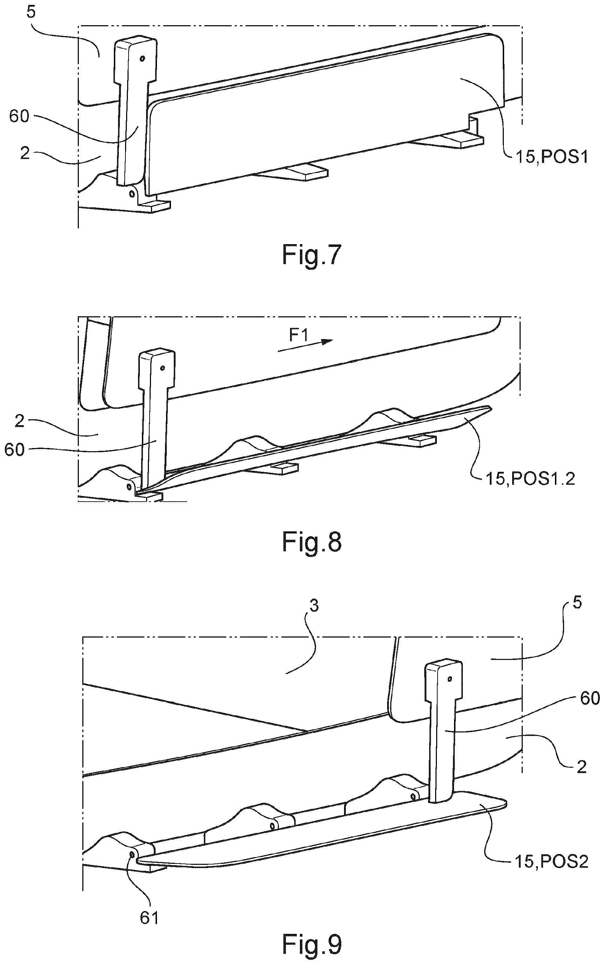

La figure 7 illustre la marche 15 dans la position escamotée POS1.

En référence à la figure 8 lorsqu'un individu ouvre la porte 5 en la déplaçant en translation selon la flèche F1, le bras de commande 60 exerce une force sur la marche 15 qui provoque sa rotation progressive, la marche 15 étant dans une position intermédiaire POS1.2.

En référence à la figure 9, à l'issue du déplacement de la porte 5, la marche atteint sa position déployée POS2.

Lors de la fermeture de la porte 5, le ressort 61 tend à repositionner la marche 15 dans sa position escamotée.

En cas de blocage de la marche 15 durant le déplacement de la porte 5, un individu peut déplacer le bras de commande 60 dans sa position inactive pour désolidariser la marche 15 et la porte 5.

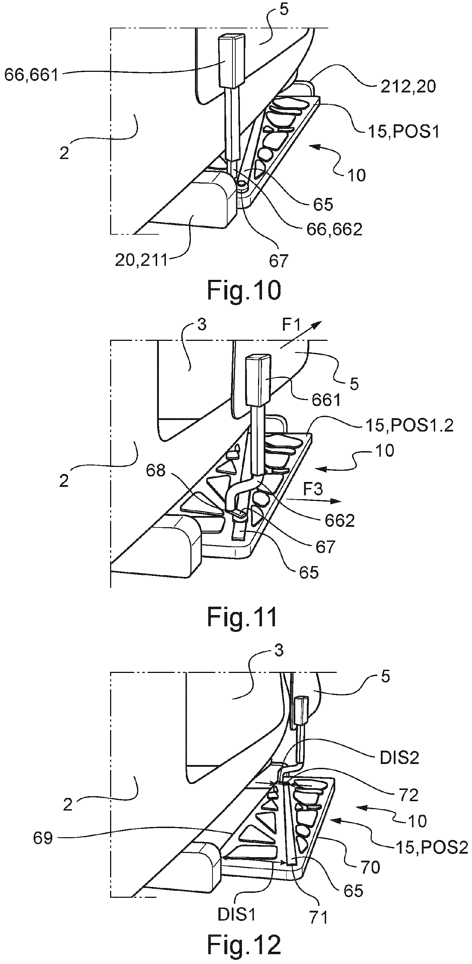

Selon une deuxième réalisation décrite par les figures 10 à 14, la marche 15 peut être mobile en translation, en particulier selon une direction sensiblement orthogonale à la direction de coulissement de la porte 5.

En référence à la figure 10, la marche 15 peut être portée par deux flancs 211, 212 rainurés du support 20. La marche 15 peut ainsi coulisser par rapport au support 20 en étant guidée dans des gorges des flancs 211, 212.

De plus, la marche 15 comprend une rainure 65 inclinée. La rainure 65 n'est pas parallèle aux bords arrière 69 et avant 70 de la marche 15 qui sont visibles sur la figure 12.

En référence à la figure 10, le système de déploiement 30 comporte aussi un organe de connexion 66. Cet organe de connexion 66 comprend un corps 661 porté par la porte 5 pour être solidaire en translation de la porte 5. De plus, l'organe de connexion 66 comporte un coulisseau 67 qui coulisse dans la rainure 65.

Eventuellement, le coulisseau 67 est relié au corps 661 par un lien 662. Le lien 662 est articulé à la fois au corps 661 et au coulisseau pour tolérer une cinématique complexe de la porte 5.

Selon l'alternative des figures 10 à 12, la sécurité 80 peut comprendre une zone 68 fusible de l'organe de connexion 66. Par exemple, la zone fusible 68 est un tronçon du lien 662 articulé au coulisseau, ce tronçon étant fragilisé pour rompre lorsque la marche est bloquée et que la porte coulisse.

La figure 10 illustre la marche dans la position escamotée POS1.

En référence à la figure 11 lorsque la porte 5 se déplace, le coulisseau 67 coulisse dans la rainure 65. Le coulisseau 67 exerce alors une force sur la marche 15 induisant sa translation selon la flèche F3. La marche 15 se trouve dans une position intermédiaire POS1.2

En référence à la figure 12, à l'issue de l'ouverture complète de la porte, la marche se trouve dans la position déployée POS2.

La figure 12 permet de plus d'illustrer d'une première distance DIS1 séparant une première extrémité 71 de la rainure 65 du bord arrière 69. Cette première distance DIS1 est supérieure à une deuxième distance DIS2 séparant la deuxième extrémité 72 de la rainure 65 de ce même bord arrière 69. La deuxième extrémité de la rainure 65 est en outre plus proche de la porte 5 que la première extrémité de la rainure 65 dans la position déployée POS2.

Si la marche 15 se bloque durant le déplacement de la porte 5, la zone 68 fusible rompt ce qui permet de désolidariser automatiquement la marche 15 de la porte 5.

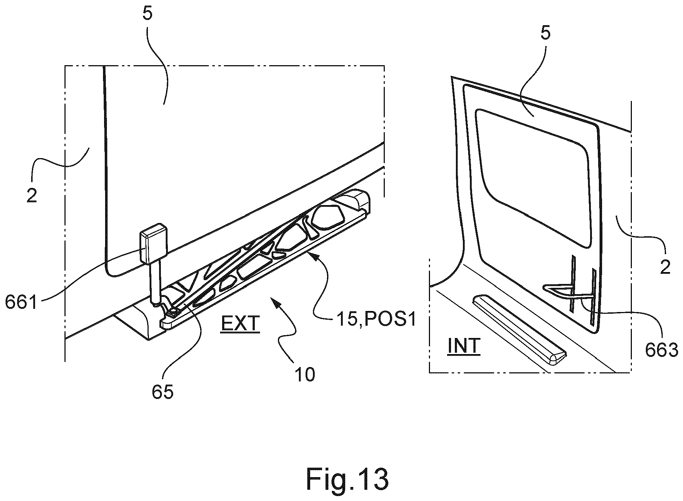

Selon l'alternative des figures 13 et 14, le corps 661 peut être déplacé par un moyen de préhension 663 au regard du milieu intérieur pour désolidariser manuellement la marche 15 de la porte 5. Par exemple, le moyen de préhension 663 peut comporter une poignée permettant de déplacer vers le haut l'organe de connexion 66 pour enlever le coulisseau 67 de la rainure 65.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Véhicule (1) muni d'une porte (5) coulissante et d'un marchepied (10), le marchepied (10) comportant une marche (15) mobile d'une position escamotée (POS1) vers une position déployée (POS2) et inversement, ledit marchepied (10) comporte un système de déploiement (30) mécanique non motorisé relié à la marche (15) et à la porte (5) coulissante, ledit système de déploiement (30) étant activé par un déplacement de ladite porte (5) pour déplacer ladite marche (15) entre la position déployée (POS2) et la position escamotée (POS1), ledit marchepied (10) comprend une sécurité (80) configurée pour désolidariser ladite porte (5) et ladite marche (15) en cas de blocage de ladite marche (15),
**caractérisé en ce que** ledit système de déploiement (30) comporte un arbre de commande (31) portant ladite marche (15) et solidaire de ladite marche (15) en rotation autour d'un axe de basculement (AX1), ladite marche (15) étant mobile en rotation autour dudit axe de basculement (AX1) entre ladite position escamotée (POS1) et ladite position déployée (POS2), ledit système de déploiement (30) comportant au moins un engrenage (35) interposé entre ledit arbre de commande (31) et ladite porte (5).

2. Véhicule selon la revendication 1,
**caractérisé en ce que** ledit au moins un engrenage (35) comporte une roue (36) solidaire au moins hors cas de blocage de la marche d'un arbre de liaison (38), la roue (36) engrenant une cannelure (37) hélicoïdale solidaire au moins hors cas de blocage de la marche dudit arbre de commande (31), ou ledit au moins un engrenage (35) comporte une cannelure hélicoïdale solidaire, au moins hors cas de blocage de la marche, d'un arbre de liaison (38), la cannelure engrenant une roue solidaire au moins hors cas de blocage de la marche dudit arbre de commande (31).

3. Véhicule selon l'une quelconque des revendications 1 à 2, **caractérisé en ce que** ladite sécurité (80) comporte un limiteur de couple (81).

4. Véhicule selon la revendication 2,
**caractérisé en ce que** ledit arbre de liaison (38) porte une poulie (39), le système de déploiement (30) comportant une courroie (40) portée par ladite poulie (39), ledit système de déploiement (30) ayant un lien de commande (45), ledit lien de commande (45) ayant une première attache (46) solidaire de la courroie (40) et une deuxième attache (50) attachée à ladite porte (5).

5. Véhicule selon la revendication 4,
**caractérisé en ce que** ledit lien de commande (45) comporte un premier tronçon (47) relié à la première attache (46) et à un guide (48), ledit lien de commande (45) comprenant un deuxième tronçon (49) relié au guide (48) et relié à la deuxième attache (50), ledit marchepied (10) comportant un rail (51) le long duquel coulisse ledit guide (48).

6. Véhicule selon la revendication 5,
**caractérisé en ce que** ledit rail (51) appartient à un support (20) fixé à une structure (2) du véhicule (1).

7. Véhicule selon l'une quelconque des revendications 4 à 6, **caractérisé en ce que** ledit système de déploiement (30) comporte deux arbres de liaison (38) munis chacun d'une dite poulie (39), ladite courroie (40) étant portée par les poulies (39) des deux arbres de liaison (38).

8. Véhicule selon la revendication 2,
**caractérisé en ce que** ledit arbre de liaison (38) porte un pignon (55) engrené par une crémaillère (56), ledit système de déploiement (30) comprenant un rail de guidage (57) dans lequel coulisse ladite crémaillère (56), ledit système de déploiement comportant un lien de guidage (58) articulé à ladite porte (5), ladite crémaillère (56) comportant un coulisseau (59) coulissant le long du lien de guidage (58).

9. Véhicule selon l'une quelconque des revendications 1 à 8, **caractérisé en ce que** le marchepied (10) comporte un support (20) fixe solidarisé à une structure (2) du véhicule (1), ledit support (20) comportant deux flancs (27) fixés à ladite structure (2), ledit arbre de commande (31) étant porté par lesdits flancs (27), ledit arbre de commande (31) s'étendant longitudinalement entre les deux flancs (27) selon ledit axe de basculement (AX1).

10. Véhicule selon l'une quelconque des revendications 1 à 9, **caractérisé en ce que** le marchepied (10) comporte un support (20) fixe solidarisé à une structure (2) du véhicule (1), ledit support (20) comporte un boîtier (21) présentant une face supérieure (23) située sous ladite porte (5) selon une direction en élévation (DIR), ledit boîtier (21) ayant une face avant (22) présentant une ouverture (28), ladite marche (15) obturant ladite ouverture (28) dans ladite position escamotée (POS1), ladite face supérieure (23) étant configurée pour porter un humain.

11. Véhicule muni d'une porte (5) coulissante et d'un marchepied (10), le marchepied (10) comportant une marche (15) mobile d'une position escamotée (POS1) vers une position déployée (POS2) et inversement, ledit marchepied (10) comporte un système de déploiement (30) mécanique non motorisé relié à la marche (15) et à la porte (5) coulissante, ledit système de déploiement (30) étant activé par un déplacement de ladite porte (5) pour déplacer ladite marche (15) entre la position déployée (POS2) et la position escamotée (POS1), ledit marchepied (10) comprend une sécurité (80) configurée pour désolidariser ladite porte (5) et ladite marche (15) en cas de blocage de ladite marche (15),
**caractérisé en ce que** ladite marche (15) étant mobile en rotation autour d'un axe de basculement (AX1) entre la position déployée (POS2) et la position escamotée (POS1), ledit système de déploiement (30) comporte un bras de commande (60) mobile par rapport à la porte (5), ladite sécurité (80) comporte un moyen de préhension (85) solidaire du bras de commande (60) pour déplacer manuellement ledit bras de commande (60) entre une position active (POSACT) et une position inactive (POSINACT), ledit bras de commande (60) n'étant pas en contact avec ladite marche (15) dans la position inactive (POSINACT), ledit bras de commande (60) étant dans la position active (POSACT) en contact avec ladite marche (15) pour provoquer une rotation de la marche (15) autour de l'axe de basculement (AX1) par interférence de forme, ledit marchepied (10) comprenant au moins un ressort (61) exerçant un effort de rappel pour déplacer la marche (15) dans la position escamotée.

12. Véhicule muni d'une porte (5) coulissante et d'un marchepied (10), le marchepied (10) comportant une marche (15) mobile d'une position escamotée (POS1) vers une position déployée (POS2) et inversement, ledit marchepied (10) comporte un système de déploiement (30) mécanique non motorisé relié à la marche (15) et à la porte (5) coulissante, ledit système de déploiement (30) étant activé par un déplacement de ladite porte (5) pour déplacer ladite marche (15) entre la position déployée (POS2) et la position escamotée (POS1), ledit marchepied (10) comprend une sécurité (80) configurée pour désolidariser ladite porte (5) et ladite marche (15) en cas de blocage de ladite marche (15), où ladite marche (15) est mobile en translation, **caractérisé en ce que** ladite marche (15) comprend une rainure (65) inclinée, ledit système de déploiement (30) comportant un organe de connexion (66) muni d'un coulisseau (67) coulissant dans ladite rainure (65) et solidaire de ladite porte (5), ladite sécurité (80) comprenant au moins un moyen de préhension rendant mobile l'organe de connexion (66) ou une zone (68) fusible de l'organe de connexion (66).

13. Véhicule selon l'une quelconque des revendications 1 à 12, **caractérisé en ce que** ledit véhicule (1) est un giravion.

## Patentansprüche

1. Verkehrsmittel (1) mit einer Schiebetür (5) und einem Trittbrett (10), wobei das Trittbrett (10) eine Stufe (15) aufweist, die von einer eingefahrenen Position (POS1) in eine ausgefahrene Position (POS2) und umgekehrt beweglich ist, wobei das Trittbrett (10) ein mechanisches, nicht motorisiertes Ausfahrsystem (30) aufweist, das mit der Stufe (15) und der Schiebetür (5) verbunden ist, das Ausfahrsystem (30) durch eine Bewegung der Tür (5) aktiviert wird, um die Stufe (15) zwischen der ausgefahrenen Position (POS2) und der eingefahrenen Position (POS1) zu bewegen, wobei das Trittbrett (10) eine Sicherung (80) umfasst, die konfiguriert ist, um die Tür (5) und die Stufe (15) im Falle einer Blockierung der Stufe (15) voneinander zu lösen,
**dadurch gekennzeichnet, dass** das Ausfahrsystem (30) eine Antriebswelle (31) umfasst, die die Stufe (15) trägt und mit der Stufe (15) um eine Kippachse (AX1) drehfest verbunden ist, wobei die Stufe (15) um die Kippachse (AX1) zwischen der eingefahrenen Position (POS1) und der ausgefahrenen Position (POS2) drehbeweglich ist, wobei das Ausfahrsystem (30) mindestens ein Getriebe (35) umfasst, das zwischen der Antriebswelle (31) und der Tür (5) angeordnet ist.

2. Verkehrsmittel nach Anspruch 1,
**dadurch gekennzeichnet, dass** das mindestens eine Getriebe (35) ein Rad (36) umfasst, das zumindest, wenn die Stufe nicht blockiert ist, fest mit einer Verbindungswelle (38) verbunden ist, wobei das Rad (36) mit einer schraubenförmigen Keilnut (37) kämmt, die zumindest, wenn die Stufe nicht blockiert ist, fest mit der Antriebswelle (31) verbunden ist,
oder das mindestens eine Getriebe (35) eine schraubenförmige Keilnut aufweist, die zumindest, wenn die Stufe nicht blockiert ist, fest mit einer Verbindungswelle (38) verbunden ist, wobei die Keilnut mit einem Rad kämmt, das zumindest, wenn die Stufe nicht blockiert ist, fest mit der Steuerwelle (31) verbunden ist.

3. Verkehrsmittel nach einem der Ansprüche 1 bis 2,
**dadurch gekennzeichnet, dass** die Sicherung (80) einen Drehmomentbegrenzer (81) umfasst.

4. Verkehrsmittel nach Anspruch 2,
**dadurch gekennzeichnet, dass** die Verbindungswelle (38) eine Riemenscheibe (39) trägt, das Ausfahrsystem (30) einen von der Riemenscheibe (39) getragenen Riemen (40) umfasst, und das Ausfahrsystem (30) eine Steuerverbindung (45) aufweist, wobei die Steuerverbindung (45) eine erste Befestigung (46), die fest mit dem Riemen (40) verbunden ist, und eine zweite Befestigung (50) aufweist, die an der Tür (5) befestigt ist.

5. Verkehrsmittel nach Anspruch 4,
**dadurch gekennzeichnet, dass** die Steuerverbindung (45) einen ersten Abschnitt (47) aufweist, der mit der ersten Befestigung (46) und mit einer Führung (48) verbunden ist, und dass die Steuerverbindung (45) einen zweiten Abschnitt (49) aufweist, der mit der Führung (48) verbunden ist und mit der zweiten Befestigung (50) verbunden ist, wobei das Trittbrett (10) eine Schiene (51) aufweist, an der die Führung (48) entlang gleitet.

6. Verkehrsmittel nach Anspruch 5,
**dadurch gekennzeichnet, dass** die Schiene (51) zu einem Träger (20) gehört, der an einer Struktur (2) des Verkehrsmittels (1) befestigt ist.

7. Verkehrsmittel nach einem der Ansprüche 4 bis 6,
**dadurch gekennzeichnet, dass** das Ausfahrsystem (30) zwei Verbindungswellen (38) umfasst, die jeweils mit einer besagten Riemenscheibe (39) versehen sind, wobei der Riemen (40) von den Riemenscheiben (39) der beiden Verbindungswellen (38) getragen ist.

8. Verkehrsmittel nach Anspruch 2,
**dadurch gekennzeichnet, dass** die Verbindungswelle (38) ein Ritzel (55) trägt, das mit einer Zahnstange (56) kämmt, das Ausfahrsystem (30) eine Führungsschiene (57) umfasst, in der die Zahnstange (56) gleitet, das Ausfahrsystem eine Führungsverbindung (58) umfasst, die an der Tür (5) angelenkt ist, und die Zahnstange (56) einen Schieber (59) umfasst, der entlang der Führungsverbindung (58) gleitet.

9. Verkehrsmittel nach einem der Ansprüche 1 bis 8,
**dadurch gekennzeichnet, dass** das Trittbrett (10) einen ortsfesten Träger (20) umfasst, der fest mit einer Struktur (2) des Verkehrsmittels (1) verbunden ist, der Träger (20) zwei Flanken (27) umfasst, die an der Struktur (2) befestigt sind, die Steuerwelle (31) von den Flanken (27) getragen ist, und die Steuerwelle (31) sich in Längsrichtung zwischen den beiden Flanken (27) entlang der Kippachse (AX1) erstreckt.

10. Verkehrsmittel nach einem der Ansprüche 1 bis 9,
**dadurch gekennzeichnet, dass** das Trittbrett (10) einen ortsfesten Träger (20) umfasst, der fest mit einer Struktur (2) des Verkehrsmittels (1) verbunden ist, der Träger (20) ein Gehäuse (21) umfasst, das eine Oberseite (23) aufweist, die sich in einer Aufwärtsrichtung (DIR) unter der Tür (5) befindet, das Gehäuse (21) eine Vorderseite (22) mit einer Öffnung (28) hat, die Stufe (15) die Öffnung (28) in der eingefahrenen Position (POS1) verschließt, und die Oberseite (23) konfiguriert ist, um einen Menschen zu tragen.

11. Verkehrsmittel mit einer Schiebetür (5) und einem Trittbrett (10), wobei das Trittbrett (10) eine Stufe (15) aufweist, die von einer eingefahrenen Position (POS1) in eine ausgefahrene Position (POS2) und umgekehrt bewegbar ist, wobei das Trittbrett (10) ein mechanisches, nicht motorisiertes Ausfahrsystem (30) aufweist, das mit der Stufe (15) und der Schiebetür (5) verbunden ist, das Ausfahrsystem (30) durch eine Bewegung der Tür (5) aktiviert wird, um die Stufe (15) zwischen der ausgefahrenen Position (POS2) und der eingefahrenen Position (POS1) zu bewegen, wobei das Trittbrett (10) eine Sicherung (80) umfasst, die konfiguriert ist, um die Tür (5) und die Stufe (15) im Falle einer Blockierung der Stufe (15) voneinander zu lösen,
**dadurch gekennzeichnet, dass** die Stufe (15) um eine Kippachse (AX1) zwischen der ausgefahrenen Position (POS2) und der eingefahrenen Position (POS1) drehbeweglich ist, das Ausfahrsystem (30) einen Steuerarm (60) umfasst, der in Bezug auf die Tür (5) beweglich ist, die Sicherung (80) ein Greifmittel (85) umfasst, das fest mit dem Steuerarm (60) verbunden ist, um den Steuerarm (60) manuell zwischen einer aktiven Position (POSACT) und einer inaktiven Position (POSINACT) zu verschieben, wobei der Steuerarm (60) in der inaktiven Position (POSINACT) nicht in Kontakt mit der Stufe (15) ist, wobei der Steuerarm (60) in der aktiven Position (POSACT) in Kontakt mit der Stufe (15) ist, um eine Drehung der Stufe (15) um die Kippachse (AX1) durch Forminterferenz zu bewirken, und wobei das Trittbrett (10) mindestens eine Feder (61) umfasst, die eine Rückstellkraft ausübt, um die Stufe (15) in die eingefahrene Position zu verlagern.

12. Verkehrsmittel mit einer Schiebetür (5) und einem Trittbrett (10), wobei das Trittbrett (10) eine Stufe (15) aufweist, die von einer eingefahrenen Position (POS1) in eine ausgefahrene Position (POS2) und umgekehrt beweglich ist, wobei das Trittbrett (10) ein mechanisches, nicht motorisiertes Ausfahrsystem (30) aufweist, das mit der Stufe (15) und mit der Schiebetür (5) verbunden ist, das Ausfahrsystem (30) durch eine Bewegung der Tür (5) aktiviert wird, um die Stufe (15) zwischen der ausgefahrenen Position (POS2) und der eingefahrenen Position (POS1) zu bewegen, wobei das Trittbrett (10) eine Sicherung (80) umfasst, die konfiguriert ist, um die Tür (5) und die Stufe (15) im Falle einer Blockierung der Stufe (15) voneinander zu lösen, wobei die Stufe (15) translatorisch beweglich ist,
**dadurch gekennzeichnet, dass** die Stufe (15) eine schräge Nut (65) umfasst, wobei das Ausfahrsystem (30) ein Verbindungsorgan (66) umfasst, das mit einem Schieber (67) versehen ist, der in der Nut (65) gleitet und fest mit der Tür (5) verbunden ist, wobei die Sicherung (80) mindestens ein Greifmittel, das das Verbindungsorgan (66) beweglich macht, oder eine Sollbruchstelle (68) des Verbindungsorgans (66) umfasst.

13. Verkehrsmittel nach einem der Ansprüche 1 bis 12, **dadurch gekennzeichnet, dass** das Verkehrsmittel (1) ein Drehflügler ist.

## Claims

1. Vehicle (1) equipped with a sliding door (5) and a step plate (10), the step plate (10) comprising a step (15) which can be moved from a retracted position (POS1) to a deployed position (POS2) and vice versa, said step plate (10) comprises a non-motorised mechanical deployment system (30) linked to the step (15) and to the sliding door (5), said deployment system (30) being activated by a movement of said door (5) in order to move said step (15) between the deployed position (POS2) and the retracted position (POS1), said step plate (10) comprises a guard (80) configured to release said door (5) and said step (15) in the event of said step (15) becoming blocked,
**characterised in that** said deployment system (30) comprises a drive shaft (31) bearing said step (15) and fixed to said step (15) in rotation about a tilting axis (AX1), said step (15) being capable of being rotated about said tilting axis (AX1) between said retracted position (POS1) and said deployed position (POS2), said deployment system (30) comprising at least one gear (35) placed between said drive shaft (31) and said door (5).

2. Vehicle according to claim 1,
**characterised in that** said at least one gear (35) comprises a wheel (36) which is fixed at least when the step of a connecting shaft (38) is not blocked, the wheel (36) engaging a helicoidal groove (37) which is fixed at least when the step of said drive shaft (31) is not blocked, or said at least one gear (35) comprises a helicoidal groove which is fixed at least when the step is not blocked, of a connecting shaft (38), the groove engaging a wheel which is fixed at least when the step of said drive shaft (31) is not blocked.

3. Vehicle according to any one of claims 1 to 2,
**characterised in that** said guard (80) comprises a torque limiter (81).

4. Vehicle according to claim 2,
**characterised in that** said connecting shaft (38) bears a pulley (39), the deployment system (30) comprising a belt (40) carried by said pulley (39), said deployment system (30) having a control link (45), said control link (45) having a first fastener (46) fixed to the belt (40) and a second fastener (50) attached to said door (5).

5. Vehicle according to claim 4,
**characterised in that** said control link (45) comprises a first section (47) linked to the first fastener (46) and to a guide (48), said control link (45) comprising a second section (49) linked to the guide (48) and linked to the second fastener (50), said step plate (10) comprising a rail (51) along which said guide (48) slides.

6. Vehicle according to claim 5,
**characterised in that** said rail (51) is part of a support (20) fixed to a structure (2) of the vehicle (1).

7. Vehicle according to any one of claims 4 to 6,
**characterised in that** said deployment system (30) comprises two connecting shafts (38) each equipped with one said pulley (39), said belt (40) being borne by the pulleys (39) of the two connecting shafts (38).

8. Vehicle according to claim 2,
**characterised in that** said connecting shaft (38) bears a pinion (55) engaged by a rack (56), said deployment system (30) comprising a guide rail (57) in which said rack (56) slides, said deployment system comprising a guiding link (58) articulated to said door (5), said rack (56) comprising a ram (59) sliding along the guiding link (58).

9. Vehicle according to any one of claims 1 to 8,
**characterised in that** the step plate (10) comprises a stationary support (20) engaged with a structure (2) of the vehicle (1), said support (20) comprising two flanks (27) fixed to said structure (2), said drive shaft (31) being borne by said flanks (27), said drive shaft (31) extending longitudinally between the two flanks (27) along said tilting axis (AX1).

10. Vehicle according to any one of claims 1 to 9,
**characterised in that** the step plate (10) comprises a stationary support (20) engaged with a structure (2) of the vehicle (1), said support (20) comprises a casing (21) having an upper face (23) situated below said door (5) in an elevation direction (DIR), said casing (21) having a front face (22) having an opening (28), said step (15) filling said opening (28) in said retracted position (POS1), said upper face (23) being configured to bear a human.

11. Vehicle equipped with a sliding door (5) and a step plate (10), the step plate (10) comprising a step (15) which can be moved from a retracted position (POS1) to a deployed position (POS2) and vice versa, said step plate (10) comprises a non-motorised mechanical deployment system (30) linked to the step (15) and to the sliding door (5), said deployment system (30) being activated by a movement of said door (5) in order to move said step (15) between the deployed position (POS2) and the retracted position (POS1), said step plate (10) comprises a guard (80) configured to release said door (5) and said step (15) in the event of said step (15) becoming blocked,
**characterised in that** said step (15) is capable of being rotated about a tilting axis (AX1) between the deployed position (POS2) and the retracted position (POS1), said deployment system (30) comprises a control arm (60) which is mobile in relation to the door (5), said guard (80) comprises gripping means (85) fixed to the control arm (60) in order to move said control arm (60) manually between an active position (POSACT) and an inactive position (POSINACT), said control arm (60) not being in contact with said step (15) in the inactive position (POSINACT), said control arm (60) being in the active position (POSACT) in contact with said step (15) in order to cause the step (15) to rotate about the tilting axis (AX1) by causing the shape to change, said step plate (10) comprising at least one spring (61) exerting a return force in order to move the step (15) into the retracted position.

12. Vehicle equipped with a sliding door (5) and a step plate (10), the step plate (10) comprising a step (15) which can be moved from a retracted position (POS1) to a deployed position (POS2) and vice versa, said step plate (10) comprises a non-motorised mechanical deployment system (30) linked to the step (15) and to the sliding door (5), said deployment system (30) being activated by a movement of said door (5) in order to move said step (15) between the deployed position (POS2) and the retracted position (POS1), said step plate (10) comprises a guard (80) configured to release said door (5) and said step (15) in the event of said step (15) becoming blocked, where said step (15) is mobile in translation,
**characterised in that** said step (15) comprises an inclined groove (65), said deployment system (30) comprising a connecting member (66) equipped with a ram (67) sliding into said groove (65) and fixed to said door (5), said guard (80) comprising at least one gripping means causing the connecting member (66), or an area (68) of the connecting member (66) which can be fused, to move.

13. Vehicle according to any one of claims 1 to 12, **characterised in that** said vehicle (1) is a rotorcraft.
